# EUROPEAN PATENT APPLICATION

(11) **EP 4 293 284 A1**
(43) Date of publication of application: **20.12.2023**
(21) Application number: 23179229.2
(22) Date of filing: 14.06.2023
(51) Int. Cl.: F24C 7/08, F24C 15/08, G01K 1/14

(54) **SENSOR ARRANGEMENT IN AN OVEN**

(30) Priority: 16.06.2022 SI 202200093
(71) Applicant: Gorenje, d.o.o., 3320 Velenje (SI)
(72) Inventor: BROZIC, Luka, 51500 Krk (HR); BREZOVNIK, Blaz, 3313 Polzela (SI); CAKS, Anze, 3310 Zalec (SI)
(74) Representative: Ivancic, Bojan

(57) **Abstract**

The present invention relates to the arrangement of a sensor in an oven, in particular a temperature sensor in a household oven. According to the present invention, it is envisaged that the sensor (2) is held in the sensor holder (7), which is inserted through the through hole (6) designed in the walls (1) of the oven and which is fixed to the said walls (1), whereby the said walls (1) comprise at least an outer wall (3), at least an inner wall (4), and optionally an additional wall (5), which at least partly covers the inner wall (4).

## Description

The present invention relates to the arrangement of a sensor in an oven, in particular a temperature sensor in a household oven.

Document DE 102021101699 B3 describes a baking device comprising a baking space surrounded by walls, wherein the walls feature a hole to accommodate a light source. Also provided is a holding plate with a receiving opening to accommodate the light source, which anchors the light source in the hole. Fixing of the holding plate and sealing thereof represent a significant drawback.

Furthermore, document DE 19834643 C1 describes an oven with muffle, to which an elongated holder is attached, comprising a holding segment which holds the tube of the sensor or the sensor on the wall of the muffle. In this case, the sealing between the baking space and the surroundings represents a significant problem as well.

The object of the present invention is to create a new arrangement of the sensor in the oven which remedies the shortcomings of the known solutions.

The object according to the present invention is accomplished by the characteristics set forth in the characterising portion of claim 1. The details of the invention are disclosed in the corresponding sub-claims.

The invention is further described in detail by way of a non-limiting embodiment and with a reference to the accompanying drawings wherein
- Fig. 1: shows a three-dimensional view of a part of a back walls of an oven with a sensor viewed from inside the oven,
- Fig. 2: shows a part of the back walls of the oven with the sensor of Fig. 1 viewed from outside the oven,
- Fig. 3: shows a three-dimensional view of the oven sensor,
- Fig. 4: shows the oven sensor of Fig. 3 in a plane section along the **IV-IV** line.

Below, the invention is described in more detail based on an embodiment of a household oven comprising a baking space surrounded by walls, which comprise at least an inner wall and at least an outer wall, between which a layer of heat-insulating material is placed, whereby the said baking space can be closed with a door.

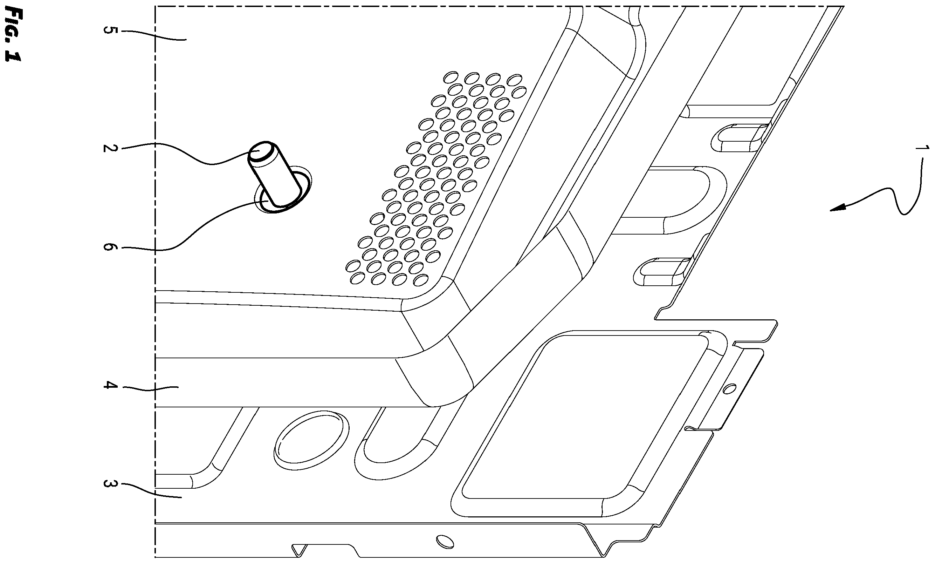

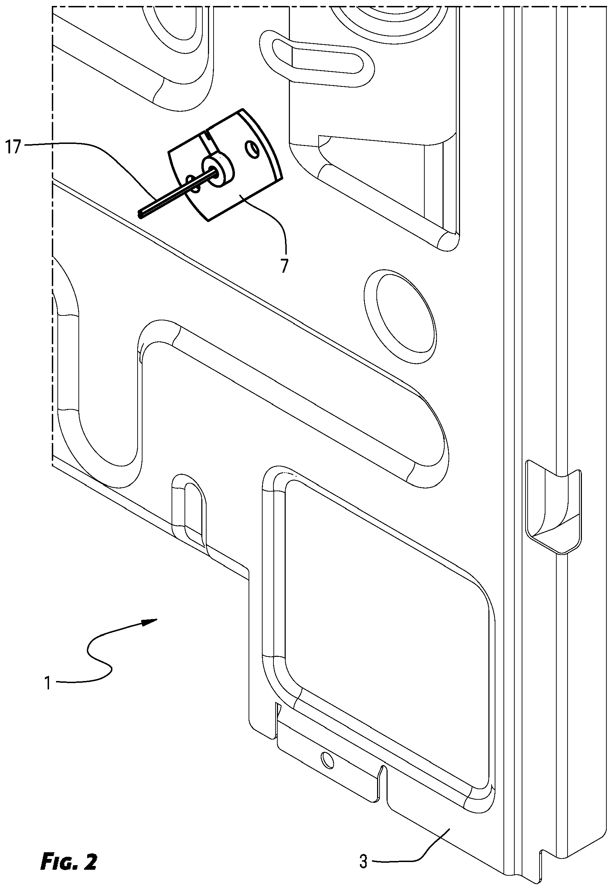

The said walls of the baking space comprise bottom walls, ceiling walls, two sets of side walls and back walls 1, as shown in Fig. 1 and Fig 2. The presented embodiment features at least one sensor 2, such as a temperature sensor, arranged in the baking space in the area of the back walls 1 in such a way that it at least partly protrudes the back walls 1. It is obvious that the said sensor can be arranged in the same or similar way in other walls without departing from the spirit of the invention.

The said back walls 1 comprise at least an outer wall 3, at least an inner wall 4, and optionally an additional wall 5, which at least partly covers the inner wall 4 in the area of a possible ventilating means. The back walls 1 are preferably designed with a round through hole 6, which preferably runs through all the walls 3, 4, 5 of the back walls 1, whereby the said through hole 6 accommodates a holder 7 of the said sensor 2.

The said holder 7 of the sensor 2 comprises a body formed as a hollow cylinder 8, the first end thereof is designed with a flange 9 extending radially away from the body 8 and comprising a series of fastening through holes 10. The said flange 9 is provided for cooperation with the outer wall 3 of the back walls 1, to which it is attached by means of respective fastening means in a form-locking or force-locking manner. The said attachment is preferably selected as a temporary joint, such as a screw joint and bayonet joint, or it can be selected as a permanent joint, such as a riveted joint, welded joint, adhesive joint, and the like.

The said cylindrical body 8 is inserted into the said through hole 6 in such a way that it extends through the said outer wall 3 of the back walls 1, and that, in the installed state, its front surface is sealingly pressed against the said inner wall 4, so that only the head 15 of the sensor 2 protrudes through the said through hole 6. Furthermore, the said holder 7 is designed along its entire length with a notch 11, which crosses both the cylindrical body 8 and the flange 9 all the way to the inside of the cylindrical body 8. The said notch 11 in the cylindrical body 8 is provided for the wiring 17 to pass through the said body 8 when the said sensor 2 is inserted into the holder 7 of the sensor.

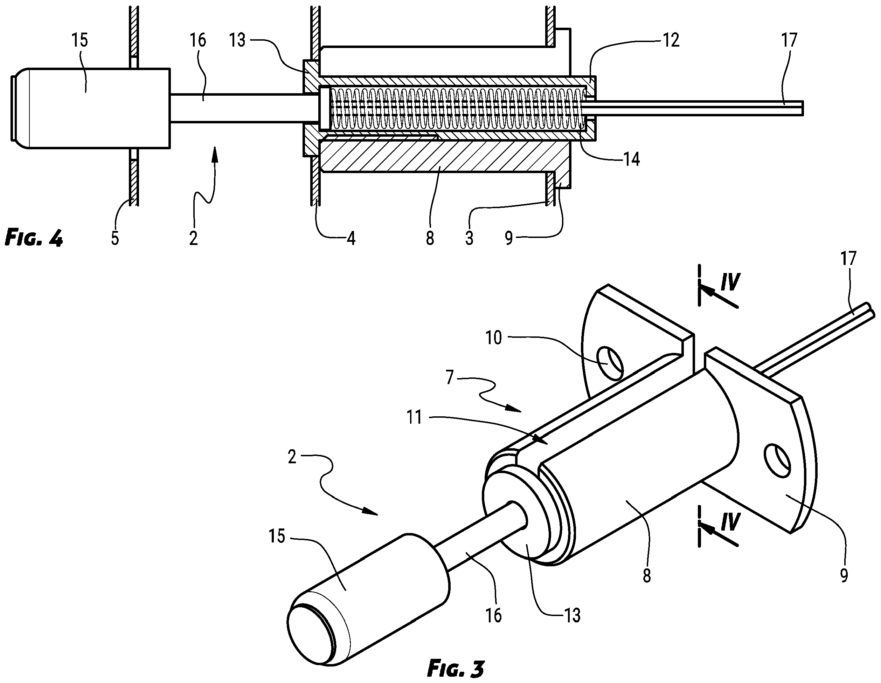

A sensor 2 known *per* se is inserted preferably by means of a screw joint into the said body 8 of the holder 7 said sensor comprising a cylindrical insert 12 with a radial extension 13 pressing against the end of the said body 8 facing away from the flange 9 and serving as a limiter during the installation of the sensor 2 into the body 8 of the holder, a flexible means 14, which allows for the movement of the head 15 of the sensor 2 in the longitudinal direction (see the **A** arrow in Fig. 4) of the sensor 2, a stem 16, which is on one side connected to the said head 15 of the sensor 2 and on the other side cooperates with the said flexible means 14, and wiring 17 for connecting the said sensor 2 to the data and/or power module known *per* se and not shown.

## Claims

1. An arrangement of a sensor in an oven, in particular a temperature sensor in a household oven, **characterised in that a** sensor (2) is held in a sensor holder (7), which is inserted through a through hole (6) designed in walls (1) of an oven and which is fixed to the said walls (1), whereby the said walls (1) comprise at least an outer wall (3), at least an inner wall (4), and optionally an additional wall (5), which at least partly covers the inner wall (4).

2. An arrangement of the sensor according to claim 1, **characterised in that** the said holder (7) of the sensor (2) comprises a body formed as a hollow cylinder (8), the first end thereof is formed with a flange (9) whereby the said flange (9) is provided for cooperation with the outer wall ((3) of the said walls (1), which it is attached to by means of suitable fastening means, whereby the said holder (7) is designed along its entire length with a notch (11), which crosses both the cylindrical body (8) and the flange (9) all the way to the inside of the cylindrical body (8).

3. An arrangement of the sensor according to claims 1 and 2, **characterised in that** the said cylindrical body (8) is inserted into the said through hole (6) in such a way that it runs through the said outer wall (3) of the back walls (1), and that, when installed, its front surface is sealingly pressed against the said inner wall (4).

4. An arrangement of the sensor according to any of the preceding claims, **characterised in that** the said attachment is preferably selected as a temporary joint, such as a screw joint, bayonet joint, and similar.

5. An arrangement of the sensor according to any of the preceding claims, **characterised in that** the said attachment is selected as a permanent joint, such as a riveted joint, welded joint, adhesive joint, and the like.

6. An arrangement of the sensor according to any of the preceding claims, **characterised in that** the said notch (11) in the cylindrical body (8) is, upon insertion of the said sensor (2) into the holder (7) of the sensor, envisioned to enable the wiring (17) of the sensor (2) to pass through the said body (8).

7. An arrangement of the sensor according to any of the preceding claims, **characterised in that** the said sensor (2) is inserted into the said body (8) of the holder (7) preferably by means of a screw joint.
